# EUROPEAN PATENT APPLICATION

(11) **EP 3 401 785 A1**
(43) Date of publication of application: **14.11.2018**
(21) Application number: 17781782.2
(22) Date of filing: 22.03.2017
(51) Int. Cl.: G06F 9/50

(54) **METHOD AND APPARATUS FOR MANAGING RESOURCES**

(30) Priority: 15.04.2016 CN 201610239254
(71) Applicant: Huawei Technologies Co., Ltd., Longgang District Shenzhen, Guangdong 518129 (CN)
(72) Inventor: FANG, Hongan, Shenzhen Guangdong 518129 (CN)
(74) Representative: Pfenning, Meinig & Partner mbB
(86) International application number: PCT/CN2017/077730
(87) International publication number: WO 2017/177806

(57) **Abstract**

The present invention provides a resource management method and apparatus, so as to shorten an flexible scaling time of a service that has multiple associated applications, and improve resource management efficiency. The method includes: determining an application set according to a to-be-processed service, where an application in the application set is used to process the to-be-processed service, and the application set includes at least two applications; determining resource usage of the application set; and when the resource usage of the application set meets a preset condition for resource scaling, performing resource scaling processing on each application in the application set according to a resource scaling policy corresponding to the preset condition.

## Description

This application claims priority to Chinese Patent Application No. 201610239254.8, filed with the Chinese Patent Office on April 15, 2016 and entitled "RESOURCE MANAGEMENT METHOD AND APPARATUS", which is incorporated herein by reference in its entirety.

### TECHNICAL FIELD

The present invention relates to the communications field, and more specifically, to a resource management method and apparatus in the communications field.

### BACKGROUND

With further development of a computer network and a requirement for a massive data computing capability, a cloud computing technology becomes an industry development mainstream, and becomes a development trend of a current information technology (Information Technology, "IT" for short). A core idea of cloud computing is to establish a resource pool for computing resources by using a network, uniformly manage and schedule the resource pool, and allocate the resources according to a user requirement.

Flexible scaling is an important feature of the cloud computing. Flexible scaling means that a cloud computing system may implement adaptive resource scaling according to a service requirement, so that a user may use various types of resources in the resource pool flexibly and easily.

However, a current flexible scaling mechanism is for a single application to implement resource flexible scaling. For some large systems, there may be a case in which multiple different applications are mutually associated and mutually dependent in processing of a service. If a resource is still managed according to the existing flexible scaling mechanism, resource scaling processing needs to be separately performed on each application. This causes a relatively long adaptive time of an entire service.

Specifically, processing of a service requires two applications (for example, an application A and an application B), a resource for which the application A applies needs to be used together with a resource for which the application B applies. If one of the applications (for example, the application A) completes resource scaling, for example, applies for and obtains a resource, but a system does not know that the application A is associated with another application, the system does not perform, when the application A meets a preset condition for the resource scaling, scaling on an application (for example, the application B) that is associated with the application A. That is, after the application A completes the resource scaling, the application B does not perform the resource scaling or does not complete the resource scaling. Therefore, the application A still cannot use a new applied resource in this case. That is, the applications in the service are mutually associated, and flexible scaling duration of the entire service is determined by a sum of flexible scaling duration of all associated applications in the service.

### SUMMARY

This application provides a resource management method and apparatus, so as to shorten an flexible scaling time of a service that has multiple associated applications, and improve resource management efficiency.

According to a first aspect, this application provides a resource management method, and the method includes: determining an application set according to a to-be-processed service, where an application in the application set is used to process the to-be-processed service, and the application set includes at least two applications; determining resource usage of the application set; and when the resource usage of the application set meets a preset condition for resource scaling, performing resource scaling processing on each application in the application set according to a resource scaling policy corresponding to the preset condition.

In this application, multiple applications used to process a same service are bound to form an application set, and all applications in the application set are jointly managed. When one or more applications meet the preset condition for the resource scaling, resource scaling management is simultaneously performed on each application in the application set, so as to greatly reduce an flexible scaling time of a service and improve service execution efficiency. On the other hand, compared with the prior art in which resource management is manually performed, jointly managing the applications improves resource management efficiency and reduces a manual operation and maintenance costs.

With reference to the first aspect, in a first possible implementation of the first aspect, the resource scaling policy includes a resource configuration proportion between applications in the application set, and the performing resource scaling processing on each application in the application set according to a resource scaling policy includes: increasing or reducing a resource allocation volume for each application in the application set according to the resource configuration proportion.

In this application, the resource configuration proportion is determined according to a weight of each application in the service, so that flexible scaling can be proportionally and simultaneously performed on multiple associated applications at one time, meeting requirements of different applications in different services for resources.

With reference to the foregoing implementation of the first aspect, in a second possible implementation of the first aspect, each resource carries a resource identifier, and the performing resource scaling processing on each application in the application set according to a resource scaling policy includes: determining, according to the resource scaling policy, a target resource set that is configured for the application set, where each target resource in the target resource set carries the resource identifier, and each application in the application set corresponds, on a one-to-one basis, to the resource identifier of each target resource in the target resource set; and performing resource scaling processing on each application in the application set according to the resource identifier of each target resource in the target resource set.

With reference to the foregoing implementations of the first aspect, in a third possible implementation of the first aspect, the determining resource usage of the application set includes: obtaining resource usage of each application in the application set; determining resource usage of a first application in the application set according to the resource usage of each application in the application set, and using the resource usage of the first application as the resource usage of the application set; or determining a sum, a maximum value, a minimum value, or an average value of resource usage of applications in the application set, and using the sum, the maximum value, the minimum value, or the average value of the resource usage of the applications in the application set as the resource usage of the application set.

In this application, it is determined, by comprehensively considering the weight and the resource usage of each application, whether to perform resource scaling on the application set, so that resource management is more proper.

According to a second aspect, this application provides a resource management apparatus, configured to perform the method in the first aspect or any possible implementation of the first aspect. Specifically, the apparatus includes a module that is configured to perform the method in the first aspect or any possible implementation of the first aspect.

According to a third aspect, this application provides a resource management device, and the device includes a receiver, a transmitter, a memory, a processor, and a bus system. The receiver, the transmitter, the memory, and the processor are connected to each other by using the bus system, the memory is configured to store an instruction, and the processor is configured to execute the instruction stored in the memory, so as to control the receiver to receive a signal and control the transmitter to send the signal. When the processor executes the instruction stored in the memory, the execution causes the processor to perform the method in the first aspect or any possible implementation of the first aspect.

According to a fourth aspect, this application provides a computer readable medium, configured to store a computer program, and the computer program includes an instruction used to perform the method in the first aspect or any possible implementation of the first aspect.

In some implementations, the resource usage includes at least one of the following: CPU usage, memory usage, and disk space usage.

This application provides the resource management method and apparatus, so as to shorten the flexible scaling time of the service that has the multiple associated applications and improve the service execution efficiency, and in addition reduce the manual operation and the maintenance costs and improve the resource management efficiency.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic architecture diagram of a cloud computing system applicable to an embodiment of the present invention;
FIG. 2 is a schematic flowchart of a resource management method according to an embodiment of the present invention;
FIG. 3 is a schematic flowchart of a resource management method according to another embodiment of the present invention;
FIG. 4 is a schematic block diagram of a resource management apparatus according to an embodiment of the present invention; and
FIG. 5 is a schematic block diagram of a resource management device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For ease of understanding and description, the following uses a cloud computing system as an example to describe in detail a method according to an embodiment of the present invention.

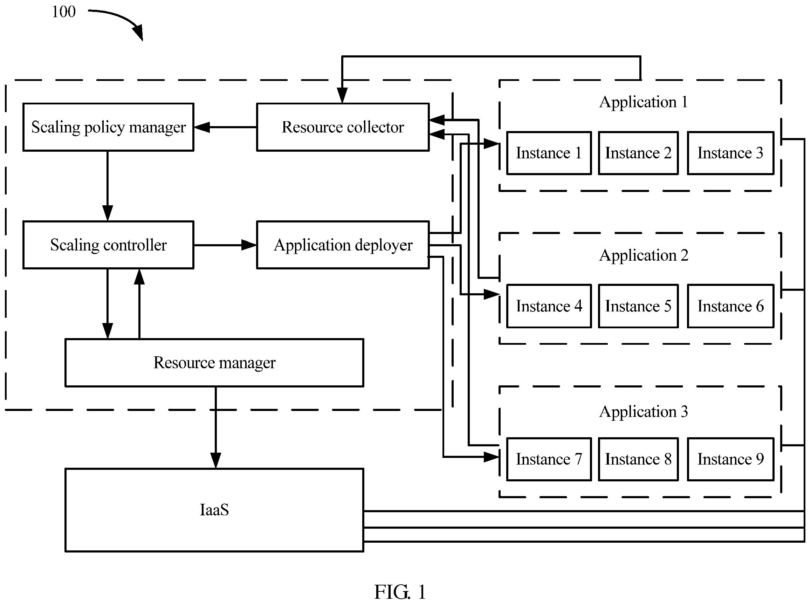

For ease of understanding, an architecture diagram of a cloud computing system applicable to an embodiment of the present invention is first described in detail with reference to FIG. 1.

FIG. 1 is a schematic architecture diagram of a cloud computing system 100 according to an embodiment of the present invention. As shown in FIG. 1, the cloud computing system 100 includes a scaling policy manager, a resource collector, a scaling controller, an application deployer, a resource manager, and an infrastructure as a service (Infrastructure as a Service, "IaaS" for short, or in other words, I layer) resource. The cloud computing system 100 may run multiple applications, for example, an application 1, an application 2, and an application 3 shown in FIG. 1, and each application may include multiple instances. For example, the application 1 may include an instance 1, an instance 2, and an instance 3, the application 2 may include an instance 4, an instance 5, and an instance 6, and the application 3 may include an instance 7, an instance 8, and an instance 9. This is not limited in the present invention.

It should be noted that, one instance may be understood as an application that runs on one running node, or in other words, one instance corresponds to one running node, and the running node herein may be a virtual machine, a physical machine, or a container (for example, Docker). In other words, the running node may be understood as a carrier of a resource that is provided by the cloud computing system. One instance, that is, one application runs on one resource that is provided by the cloud computing system.

In this embodiment of the present invention, a cloud computing system resource may include a central processing unit (Central Processing Unit, "CPU" for short), a memory, storage space, and a network resource. The resource may be stored at the I layer, that is, the I layer may be understood as a resource pool.

It should be understood that the above- enumerated specific content of the cloud computing system resource is merely an example for description and should not constitute any limitation on the present invention, and the present invention also should not be limited thereto. For example, the resource may further include another resource of the cloud computing system.

For ease of description, in the following, an example of applying for a resource for an application is used to describe in detail a function of each module.

In the cloud computing system 100, the resource collector is configured to: collect resource consumption such as resource usage of each instance in each application, and report the resource consumption to the scaling policy manager. As an example but not a limitation, the resource usage includes CPU usage, memory usage, and disk space usage.

The scaling policy manager is configured to perform resource configuration for each application in real time according to the resource consumption reported by the resource collector. Specifically, when determining that a resource that is currently configured by the cloud computing system for an application meets a preset condition for resource scaling, the scaling policy manager determines may determine to perform, according to a preset resource scaling policy corresponding to the preset condition, resource scaling processing (or in other words, flexible scaling processing) on the application that meets the preset condition.

In this embodiment of the present invention, the resource scaling may include resource stretching and resource shrinking. The preset condition for the resource scaling may include a first preset condition for resource stretching and a second preset condition for resource shrinking, and the preset condition for the resource scaling may include a preset condition for CPU scaling, a preset condition for memory scaling, a preset condition for storage space scaling, or the like. When usage of different types of resources meets a preset condition, resources may be stretched or shrunk according to a resource scaling policy corresponding to the preset condition. The scaling policy manager may be understood as a decision unit, and stores the preset condition for the resource scaling and the resource scaling policy. When determining that an application meets the preset condition for the resource scaling, the scaling policy manager may send a corresponding resource scaling policy to the scaling controller by using a resource scaling message, and the scaling controller performs resource scaling processing.

In this embodiment of the present invention, the resource scaling policy may be pre-configuring different sizes of resource scaling volumes (or referred to as a scaling step) for different applications. Optionally, the scaling step may be determined according to a service processing volume, and the scaling step may be updated in real time or periodically. For example, the scaling step is updated according to changes of service processing volumes recorded in historical data. In a period of a relatively large service processing volume, the scaling step is relatively large, and in a period of a relatively small service processing volume, the scaling step is relatively small.

A scaling resource size corresponding to each scaling step can be determined when an application is installed and deployed. The scaling resource size may use a quantity of CPU cores, a memory size, a storage size, or a network configuration as a unit. For example, the scaling step is a virtual machine, and a scaling resource size of the virtual machine is a quad-core CPU.

In an implementation, the scaling policy manager may pre-store an application identifier, and a correspondence between a scaling resource size and a scaling step (for ease of understanding and description, marked as a first mapping relationship). When determining to perform resource scaling processing on one of applications (for ease of understanding and description, marked as a first application), the scaling policy manager determines a scaling step and a scaling resource size corresponding to the first application, for example, configures a virtual machine with a quad-core CPU for the first application. The virtual machine may be understood as the scaling step corresponding to the first application, and the quad-core CPU may be understood as the scaling resource size corresponding to the first application. The scaling policy manager may send information about an application identifier of the first application, the corresponding scaling resource size and the corresponding scaling step to the scaling controller by using a resource scaling message.

In another implementation, the scaling policy manager may also send in advance the first mapping relationship to the scaling controller. When determining that the resource scaling processing needs to be performed on the first application, the scaling policy manager sends the application identifier of the first application to the scaling controller. The scaling controller determines the scaling step and the scaling resource size corresponding to the first application from the first mapping relationship according to the application identifier of the first application.

In this embodiment of the present invention, for ease of understanding and description, a resource that is configured by the scaling controller or the resource manager for each application is marked as a target resource.

It should be noted that, a resource that is configured by a system for each application may be carried by the virtual machine, the physical machine, or the container, or in other words, the virtual machine, the physical machine, or the container may be used as a carrier of the resource. For example, the scaling policy manager determines to configure the quad-core CPU for the first application, and may use a virtual machine to carry the quad-core CPU and allocate the virtual machine to the first application. The virtual machine is the scaling step corresponding to the first application.

After receiving the resource scaling message and determining the scaling step, the scaling controller may apply for a resource to the I layer by using the resource manager. Specifically, the scaling controller may send a resource scaling request message to the resource manager, and the resource scaling request message carries a resource volume that needs to be applied for.

The resource manager applies for the corresponding resource volume to the I layer according to the resource scaling request message. After allocating the resource according to the resource scaling request message, the I layer allocates a corresponding identifier to the resource and provides feedback to the resource manager. After applying for and obtaining the resource, the resource manager sends a resource request response message to the scaling controller. The resource request response message may carry the resource identifier of the applied resource, so as to notify the scaling controller that the corresponding resource and the resource identifier of the resource have been applied for and obtained, so that the application deployer uses the resource for the first application.

After receiving the resource request response message, the scaling controller may send a resource allocation message to the application deployer, to instruct the application deployer to allocate the resource to the first application.

In an implementation, the scaling controller may establish, according to the resource identifier fed back by the resource manager, a correspondence between an application identifier of an application for which scaling needs to be performed and the resource identifier (for ease of understanding and distinguishing, marked as a second mapping relationship). The scaling controller may send the second mapping relationship to the application deployer, so that the application deployer allocates the resource to the first application corresponding to the resource identifier according to the second mapping relationship.

It should be noted that, the scaling controller applies for the resource to the I layer by using the resource manager, and may use different threads for controlling and simultaneously apply for multiple resources for multiple associated applications, or may apply for resources to the I layer in turn. This is not limited in the present invention.

It should be further noted that the resource identifier may be allocated to the resource by using the I layer. When allocating a resource that is used for an application, the I layer may allocate a specific resource identifier to the resource, so that the scaling controller allocates the resource to the corresponding application according to the resource identifier. When the resource is released, the resource identifier of the resource is simultaneously released, and then the resource returns to the I layer. When the resource is used next time, the I layer allocates a new resource identifier to the resource again. That is, the resource identifier may be understood as, for example, an identifier (Identifier, "ID" for short) of a virtual machine. The resource identifier is an identifier that is used to distinguish different resources, so that the application deployer performs resource allocation.

It should be understood that, each of the above described modules that are configured to apply for the resource for the first application is merely an example for description and should not constitute any limitation on the present invention. Each module may be further configured for another function except the foregoing functions. Alternatively, the system may include another module except the foregoing modules, and more or fewer modules are configured to perform the above described functions. This is not particularly limited in the present invention.

It should be further understood that, the foregoing first application is merely used to distinguish an identifier of an application from an identifier of another application (for example, a second application), and "first" and "second" are merely intended to distinguish two different applications but do not indicate an execution sequence or other content.

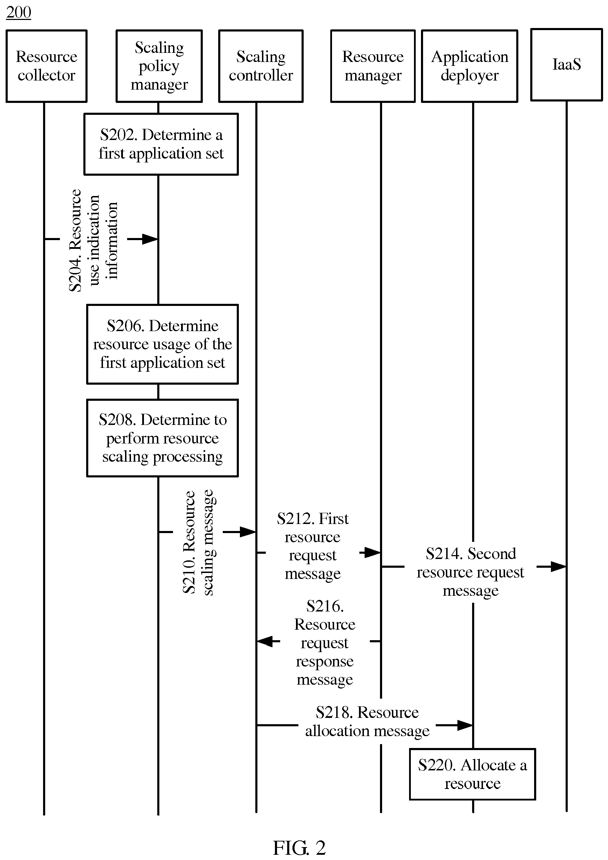

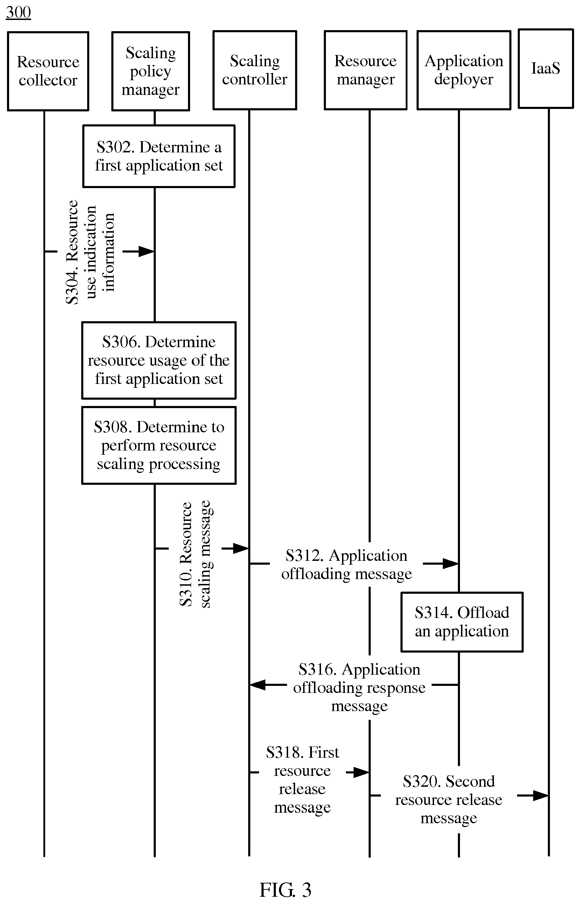

The following still uses the architecture of the cloud computing system 100 shown in FIG. 1 as an example to describe in detail a resource management method according to an embodiment of the present invention from a perspective of the cloud computing system with reference to FIG. 2 and FIG. 3.

It should be understood that the cloud computing system 100 shown in FIG. 1 may be configured to perform steps of methods in FIG. 2 and FIG. 3.

FIG. 2 is a schematic flowchart of a resource management method 200 according to an embodiment of the present invention. It should be understood that FIG. 2 shows detailed communication steps or operations that are applied to a cloud computing system, but these steps or operations are merely an example. In this embodiment of the present invention, another operation or a variant of each operation in FIG. 2 may be further performed. In addition, each step in FIG. 2 may be performed in a sequence that is different from a sequence shown in FIG. 2, and not all operations in FIG. 2 may need to be performed.

The following describes specific steps in FIG. 2.

S202. A scaling policy manager determines a first application set.

The scaling policy manager may determine a corresponding application set (for ease of understanding and description, marked as a first application set) according to a currently to-be-processed service (for ease of understanding and description, marked as a first service), and the first application set is a set of applications that are used to process the first service. The first application set may include at least two applications, and there is an association relationship between applications. For example, an application A may be executed after an application B is executed, or an application C may be executed only after an application A and an application B are simultaneously executed.

Optionally, the applications in the first application set are used to process the first service, and are not used to process a service other than the first service. Alternatively, the applications in the first application set are merely used to process the first service. The first application set may be understood as follows: If a second application set runs in the cloud computing system, and applications in the second application set are used to process a second service, an intersection set between the second application set and the first application set is empty.

In other words, if there is an intersection set between the application set corresponding to the first service and the application set corresponding to the second service, neither of the first application set and the second application set includes the intersection set. That is, an application in the intersection set is separately managed instead of being placed in the first application set or the second application set for joint management.

It should be understood that in this embodiment of the present invention, a method for determining multiple associated applications as the first application set according to the to-be-processed service is merely an example for description and should not constitute any limitation on the present invention. The cloud computing system may also define multiple unassociated applications as an application set according to a manual presetting, and perform resource scaling processing simultaneously on each application in the application set. This is not particularly limited in the present invention.

It should be further understood that, the foregoing first application set and the foregoing second application set are merely used to identify two different application sets, and "first" and "second" are merely intended to distinguish two different applications but do not indicate an execution sequence or other content.

S204. A resource collector sends resource use indication information to the scaling policy manager.

The resource collector may be configured to collect resource consumption of each instance of each application running in the cloud computing system, for example, resource usage. Therefore, the resource collector collects resource consumption of the first application set, which may be resource consumption of an application in the first application set, or may be resource consumption of each application.

The resource collector may send the resource use indication information to the scaling policy manager, and the resource use indication information is used to indicate the resource consumption of each application.

S206. The scaling policy manager determines resource usage of the first application set.

After receiving the resource use indication information sent by the resource collector, the scaling policy manager may determine the resource usage of the first application set. The scaling policy manager may determine resource usage of a preset application in the first application set and determine the resource usage of the preset application as the resource usage of the first application set; or the scaling policy manager may also determine a sum, a maximum value, a minimum value, an average value, or the like of resource usage of applications in the first application set, and use the sum, the maximum value, the minimum value, the average value, or the like of the resource usage of the applications in the preset application set as the resource usage of the first application set; or the scaling policy manager may further directly use resource usage of each application in the first application set as the resource usage of the first application set, and refer to the resource usage of each application in the first application set. In this embodiment of the present invention, specific content in which the scaling policy manager determines the resource usage of the first application set may be determined according to a weight of each application of the applications in the first service. For example, if a first application in the first service is a most important application in the first application set and another application depends on the first application, it may be determined that the preset application is the first application, and resource usage of only the first application needs to be determined; or if each application in the first service is executed in sequence, the resource usage of each application in the first application set may be determined. A specific method for determining the resource usage of the first application set is not particularly limited in the present invention.

S208. The scaling policy manager determines to perform resource scaling processing on each application in the first application set.

Specifically, when determining that the resource usage of the first application set meets a first preset condition for resource scaling, the scaling policy manager determines to perform resource scaling processing on each application in the first application set according to a preset resource scaling policy.

In this embodiment of the present invention, corresponding to the resource usage that is collected by the scaling policy manager and that is of the first application set, the first preset condition for the resource scaling may also be separately provided with a resource usage threshold of the preset application, a resource usage threshold of each application in the first application set, a sum threshold of resource usage of applications in the first application set, a maximum value threshold of resource usage of applications in the first application set, a minimum value threshold of resource usage of applications in the first application set, or an average value threshold of resource usage of applications in the first application set.

As described above, the resource usage may include CPU usage, memory usage, or storage space usage, and each of the foregoing thresholds may be a threshold of the CPU usage, a threshold of the memory usage, or a threshold of the storage space usage. This is not particularly limited in the present invention.

It should be understood that, the foregoing first preset condition is a preset condition for determining whether to apply for a resource, and is distinguished from a second preset condition for determining whether to release a resource in the following.

In this embodiment of the present invention, the resource manager may pre-store the scaling policy. For example, the resource manager may scale a resource by using a preset resource configuration proportion and according to information such as a type and a weight of each application in the first application set. The resource configuration proportion may be determined according to a proportion relationship of a processing volume between the applications when the service is deployed, that is, the resource configuration proportion may be preset. For example, an application processing volume proportion between the application A and the application B is 1:2, the scaling step is one virtual machine, and then the application A and the application B scale resources in a proportion of 1:2. That is, when one virtual machine is allocated to the application A, two virtual machines are allocated to the application B. It should be noted that, although virtual machines are allocated to both the application A and the application B, resources that are carried may be different. For example, the virtual machine allocated to the application A has the quad-core CPU, and the virtual machines allocated to the application B have octa-core CPUs. A specific resource that a virtual machine carries is determined according to a preset scaling resource size. It should be understood that, the virtual machine that is enumerated herein and used to carry the resource is merely an example for description, and may further be another physical device or virtual device that can be used to carry the resource, for example, a physical machine, or a container.

S210. The scaling policy manager sends a resource scaling message to a scaling controller.

When determining that the first application set meets the foregoing preset condition for the resource scaling, the scaling policy manager may send the resource scaling message to the scaling controller, so as to instruct the scaling controller to perform resource scaling processing. Optionally, the resource scaling message may carry information about an application identifier and a scaling step of the first application, so that the scaling controller performs resource scaling processing according to the application identifier and the scaling step of the first application.

S212. The scaling controller sends a first resource request message to a resource manager.

The scaling controller sends the first resource request message to the resource manager, so as to request the resource manager to apply for a resource according to the scaling step preset by the scaling policy manager. The resource manager may determine, according to the scaling step, a type, a quantity and a carrier of the resource that is specifically applied to an I layer, for example, apply for two quad-core virtual machines, or apply for one physical machine with a 1024 megabyte memory.

S214. The resource manager sends a second resource request message to an I layer.

The second resource request message sent by the resource manager to the I layer may carry the type, the quantity, and the carrier of the resource determined by the foregoing scaling controller.

S216. The resource manager sends a resource request response message to the scaling controller.

After completing the resource application to the I layer, the resource manager may send a resource request response message to the scaling controller to instruct the scaling controller that the resource has been applied for and obtained, so that the scaling controller performs subsequent processing. The resource request response message may carry a resource identifier of the applied resource, so that the scaling controller allocates a resource to each application in the first application set according to a second mapping relationship.

In this embodiment of the present invention, for ease of understanding and description, a set of the resource that is configured by the scaling controller or the resource manager for each application in the first application set is marked as a target resource set, and each application corresponds to one target resource.

S218. The scaling controller sends a resource allocation message to an application deployer.

S220. The application deployer allocates a resource to each application in the first application set.

The application deployer runs the corresponding application on an allocated virtual machine or another running node according to the determined resource that is allocated to each application in the first application set, that is, one or more instances are increased to run on each application in the first application set.

A specific process in which the scaling controller or the application deployer allocates the resource to each application in the first application set according to the foregoing second mapping relationship has been described in detail above. For brevity, details are not described herein again.

Therefore, in the resource management method according to this embodiment of the present invention, multiple applications used to process a first service are bound to form a first application set, and all applications in the first application set are jointly managed. When one or more applications meet the preset condition for the resource scaling, resource scaling management is simultaneously performed on each application in the first application set, so as to greatly reduce an flexible scaling time of the first service and improve execution efficiency of the first service. On the other hand, compared with the prior art in which resource management is manually performed, jointly managing the applications improves resource management efficiency and reduces a manual operation and maintenance costs.

FIG. 3 is a schematic flowchart of a resource management method 300 according to another embodiment of the present invention. It should be understood that FIG. 3 shows detailed communication steps or operations that are applied to a cloud computing system, but these steps or operations are merely an example. In this embodiment of the present invention, another operation or a variant of each operation in FIG. 3 may be further performed. In addition, each step in FIG. 3 may be performed in a sequence that is different from a sequence shown in FIG. 3, and not all operations in FIG. 3 may need to be performed.

The following describes specific steps in FIG. 3.

S302. A scaling policy manager determines a first application set.

S304. A resource collector sends resource use indication information to the scaling policy manager.

S306. The scaling policy manager determines resource usage of the first application set.

S308. The scaling policy manager determines to perform resource scaling processing on each application in the first application set.

S310. The scaling policy manager sends a resource scaling message to a scaling controller.

The scaling policy manager may determine, according to the resource usage of the first application set, to perform resource scaling processing on each application in the first application set when the resource usage of the first application set meets a second preset condition for resource scaling.

Corresponding to a first preset condition, the second preset condition for the resource scaling may also be separately provided with a resource usage threshold of a first application, a resource usage threshold of each application in the first application set, a sum threshold of resource usage of applications in the first application set, a maximum value threshold of resource usage of applications in the first application set, a minimum value threshold of resource usage of applications in the first application set, or an average value threshold of resource usage of applications in the first application set.

It should be noted that, if whether a preset condition is met is determined according to resource usage of each application in the first application set, there may be a case in which some applications in the first application set meet the first preset condition whereas some other applications meet the second preset condition. In this case, each application in the first application set may be given a priority to request to apply for a resource, and this avoids a case in which resources of other applications in the service cannot be used together due to release of resources of some applications, and consequently the entire service cannot run properly.

It should be understood that a specific process of S302 to S310 is similar to a specific process of S202 to S210. For brevity, details are not described herein again.

S312. The scaling controller sends an application offloading message to an application deployer.

The scaling controller may determine, according to the resource scaling message and a preset resource scaling policy (for example, a scaling step), a resource identifier of a resource that can be released.

S314. The application deployer offloads an application in the first application set.

The application deployer may determine an application corresponding to the resource identifier according to the foregoing second mapping relationship, and further offload the application from the resource.

In an implementation, the scaling controller may determine, according to the resource scaling message, the resource identifier of the resource that can be released. The scaling controller further determines an application identifier corresponding to the resource identifier according to the foregoing second mapping relationship. The scaling controller sends the application offloading message to the application deployer, where the application offloading message carries the resource identifier and the application identifier, so that the application deployer may offload an application from the corresponding resource according to the resource identifier and the application identifier.

In another implementation, the scaling controller may directly send the application offloading message to the application deployer, where the resource release message carries the resource identifier of the resource that can be released. The application deployer may determine, according to the resource identifier and the second mapping relationship, an application that needs to be offloaded, and offload the application from the resource.

S316. The application deployer sends an application offloading response message to the scaling controller.

After completing application offloading, the application deployer may send a resource release response message to the scaling controller, so as to instruct the scaling controller that the application offloading has been completed on the resource that can be released and the resource can be released.

S318. The scaling controller sends a first resource release message to a resource manager.

The scaling controller sends the first resource release message to the resource manager, where the first resource release message may carry the resource identifier of the resource that can be released, so as to request the resource manager to release the resource according to the resource identifier determined by the scaling policy manager.

S320. The resource manager sends a second resource release message to an I layer.

The resource manager sends the second resource release message to the I layer, where the second resource release message may carry the resource identifier of the resource that can be released. After receiving the second resource release message, the I layer may release the corresponding resource according to the resource identifier.

Therefore, in the resource management method according to this embodiment of the present invention, multiple applications used to process a first service are bound to form a first application set, and all applications in the first application set are jointly managed. When one or more applications meet the preset condition for the resource scaling, resource scaling management is simultaneously performed on each application in the first application set, so as to greatly reduce an flexible scaling time of the first service and improve execution efficiency of the first service. On the other hand, compared with the prior art in which resource management is manually performed, jointly managing the applications improves resource management efficiency and reduces a manual operation and maintenance costs.

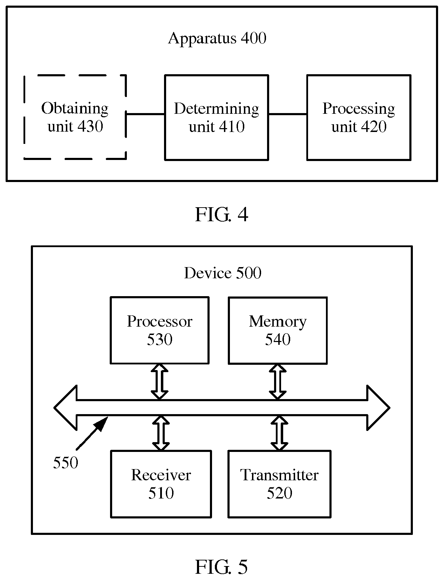

The foregoing describes in detail a resource management method according to an embodiment of the present invention with reference to FIG. 2 and FIG. 3. The following describes in detail a resource management apparatus according to an embodiment of the present invention with reference to FIG. 4.

FIG. 4 is a schematic block diagram of a resource management apparatus 400 according to an embodiment of the present invention. As shown in FIG. 4, the apparatus 400 includes a determining unit 410 and a processing unit 420.

The determining unit 410 is configured to: determine an application set according to a to-be-processed service, where an application in the application set is used to process the to-be-processed service, and the application set includes at least two applications; and determine resource usage of the application set.

The processing unit 420 is configured to: when the determining unit 410 determines that the resource usage of the application set meets a preset condition for resource scaling, simultaneously perform resource scaling processing on each application in the application set according to a resource scaling policy corresponding to the preset condition.

Optionally, the resource scaling policy includes a resource configuration proportion between applications in the application set; and the processing unit 420 is specifically configured to increase or reduce a resource allocation volume for each application in the application set according to the resource configuration proportion.

Optionally, each resource carries a resource identifier, and each resource identifier is used to indicate a corresponding resource type. The processing unit 420 is specifically configured to: determine, according to the resource scaling policy, a target resource set that is configured for the application set, where each target resource in the target resource set carries the resource identifier, and each application in the application set corresponds, on a one-to-one basis, to the resource identifier of each target resource in the target resource set; and simultaneously perform resource scaling processing on each application in the application set according to the resource identifier of each target resource in the target resource set.

Optionally, the apparatus 400 further includes an obtaining unit 430, configured to obtain resource usage of each application in the application set; and
the determining unit 410 is specifically configured to: determine resource usage of a first application in the application set, and use the resource usage of the first application as the resource usage of the application set; or determine a sum, a maximum value, a minimum value, or an average value of resource usage of applications in the application set, and use the sum, the maximum value, the minimum value, or the average value of the resource usage of the applications in the application set as the resource usage of the application set.

Optionally, the resource usage includes at least one of the following: CPU usage, memory usage, and disk space usage.

It should be understood that each unit of the resource management apparatus 400 according to this embodiment of the present invention may implement a corresponding function by using each module in FIG. 1. Specifically, a scaling policy manager in FIG. 1 may be configured to implement a function of the determining unit 420 in the apparatus 400. A scaling controller, a resource manager, and an application deployer in FIG. 1 may be configured to implement a function of the processing unit 420 in the apparatus 400. A resource collector in FIG. 1 may be configured to implement a function of the obtaining unit 430 in the apparatus 400. It should be further understood that, each module enumerated in FIG. 1 is merely an example for description, a function of each unit may also be implemented by another module except the modules enumerated in FIG. 1, and more or fewer modules may be configured to implement the above described functions. This is not particularly limited in the present invention.

It should be further understood that, the resource management apparatus 400 according to this embodiment of the present invention can correspond to the cloud computing system in the resource management method 200 and the resource management method 300 according to the embodiments of the present invention, and each unit in the apparatus 400 and the foregoing other operations and/or functions are intended to respectively implement corresponding procedures of the methods in FIG. 2 and FIG. 3. For brevity, details are not described herein again.

Therefore, in the resource management apparatus according to this embodiment of the present invention, multiple applications used to process a first service are bound to form a first application set, and all applications in the first application set are jointly managed. When one or more applications meet the preset condition for the resource scaling, resource scaling management is simultaneously performed on each application in the first application set, so as to greatly reduce an flexible scaling time of the first service and improve execution efficiency of the first service. On the other hand, compared with the prior art in which resource management is manually performed, jointly managing the applications improves resource management efficiency and reduces a manual operation and maintenance costs.

The foregoing describes in detail a resource management apparatus according to an embodiment of the present invention with reference to FIG. 4. The following describes in detail a resource management device according to an embodiment of the present invention with reference to FIG. 5.

FIG. 5 is a schematic block diagram of a resource management device 500 according to an embodiment of the present invention. As shown in FIG. 5, the device 500 includes a receiver 510, a transmitter 520, a processor 530, a memory 540, and a bus system 550. The receiver 510, the transmitter 520, the processor 530, and the memory 540 are connected by using the bus system 550, the memory 540 is configured to store an instruction, and the processor 530 is configured to execute the instruction stored in the memory 540, so as to control the receiver 510 to receive a signal and control the transmitter 520 to send the signal.

The processor 530 is configured to: determine an application set according to a to-be-processed service, where an application in the application set is used to process the to-be-processed service, and the application set includes at least two applications; determine resource usage of the application set; and when the resource usage of the application set meets a preset condition for resource scaling, perform resource scaling processing on each application in the application set according to a resource scaling policy corresponding to the preset condition.

Optionally, the resource scaling policy includes a resource configuration proportion between applications in the application set; and the processor 530 is specifically configured to increase or reduce a resource allocation volume for each application in the application set according to the resource configuration proportion.

Optionally, each resource carries a resource identifier. The processor 530 is specifically configured to: determine, according to the resource scaling policy, a target resource set that is configured for the application set, where each target resource in the target resource set carries the resource identifier, and each application in the application set corresponds, on a one-to-one basis, to the resource identifier of each target resource in the target resource set; and perform resource scaling processing on each application in the application set according to the resource identifier of each target resource in the target resource set.

Optionally, the processor 530 is further configured to: obtain resource usage of each application in the application set; determine resource usage of a first application in the application set, and use the resource usage of the first application as the resource usage of the application set; or determine a sum, a maximum value, a minimum value, or an average value of resource usage of applications in the application set, and use the sum, the maximum value, the minimum value, or the average value of the resource usage of the applications in the application set as the resource usage of the application set.

Optionally, the resource usage includes at least one of the following: CPU usage, memory usage, and disk space usage.

It should be understood that in this embodiment of the present invention, the processor 530 may be a central processing unit (central processing unit, "CPU" for short), or the processor 530 may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

The memory 540 may include a read-only memory and a random access memory, and provides an instruction and data for the processor 530. A part of the memory 540 may further include a nonvolatile random access memory. For example, the memory 540 may further store information about a device type.

In addition to a data bus, the bus system 550 may further include a power bus, a control bus, a status signal bus, and the like. However, for clarity of description, various buses are marked as the bus system 550 in the figure.

In an implementation process, the steps in the foregoing methods may be completed by using an integrated logic circuit of hardware in the processor 530 or an instruction in a form of software. The steps of the method provided with reference to the embodiments of the present invention may be directly performed by a hardware processor, or may be performed by using a combination of hardware and software modules in the processor. A software module may be located in a mature storage medium in the art, such as a random access memory, a flash memory, a read-only memory, a programmable read-only memory, an electrically erasable programmable memory, a register, or the like. The storage medium is located in the memory 540. The processor 530 reads information in the memory 540, and completes the steps of the foregoing methods in combination with hardware of the processor 530. To avoid repetition, details are not described herein again.

The resource management device 500 according to this embodiment of the present invention may correspond to the cloud computing system in the resource management method 200 and the resource management method 300 according to the embodiments of the present invention, and each unit in the device 500 and the foregoing other operations and/or functions are intended to respectively implement corresponding procedures of the methods in FIG. 2 and FIG. 3. For brevity, details are not described herein again.

Therefore, in the resource management device according to this embodiment of the present invention, multiple applications used to process a first service are bound to form a first application set, and all applications in the first application set are jointly managed. When one or more applications meet the preset condition for the resource scaling, resource scaling management is simultaneously performed on each application in the first application set, so as to greatly reduce an flexible scaling time of the first service and improve execution efficiency of the first service. On the other hand, compared with the prior art in which resource management is manually performed, jointly managing the applications improves resource management efficiency and reduces a manual operation and maintenance costs.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for ease and brevity of description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A resource management method, comprising:
determining an application set according to a to-be-processed service, wherein an application in the application set is used to process the to-be-processed service, and the application set comprises at least two applications;
determining resource usage of the application set; and
when the resource usage of the application set meets a preset condition for resource scaling, performing resource scaling processing on each application in the application set according to a resource scaling policy corresponding to the preset condition.

2. The method according to claim 1, wherein the resource scaling policy comprises a resource configuration proportion between applications in the application set; and
the performing resource scaling processing on each application in the application set according to a preset resource scaling policy comprises:
increasing or reducing a resource allocation volume for each application in the application set according to the resource configuration proportion.

3. The method according to claim 1 or 2, wherein each resource carries a resource identifier, and
the performing resource scaling processing on each application in the application set according to the resource scaling policy comprises:
determining, according to the resource scaling policy, a target resource set that is configured for the application set, wherein each target resource in the target resource set carries the resource identifier, and each application in the application set corresponds, on a one-to-one basis, to the resource identifier of each target resource in the target resource set; and
performing resource scaling processing on each application in the application set according to the resource identifier of each target resource in the target resource set.

4. The method according to any one of claims 1 to 3, wherein the determining resource usage of the application set comprises:
obtaining resource usage of each application in the application set;
determining resource usage of a preset application in the application set according to the resource usage of each application in the application set, and using the resource usage of the first application as the resource usage of the application set; or
determining a sum, a maximum value, a minimum value, or an average value of resource usage of applications in the application set according to the resource usage of each application in the application set, and using the sum, the maximum value, the minimum value, or the average value of the resource usage of the applications in the application set as the resource usage of the application set.

5. The method according to any one of claims 1 to 4, wherein the resource usage comprises at least one of the following: CPU usage, memory usage, and disk space usage.

6. A resource management apparatus, comprising:
a determining unit, configured to: determine an application set according to a to-be-processed service, wherein an application in the application set is used to process the to-be-processed service, and the application set comprises at least two applications; and determine resource usage of the application set; and
a processing unit, configured to: when the determining unit determines that the resource usage of the application set meets a preset condition for resource scaling, perform resource scaling processing on each application in the application set according to a resource scaling policy corresponding to the preset condition.

7. The apparatus according to claim 6, wherein the resource scaling policy comprises a resource configuration proportion between applications in the application set; and
the processing unit is specifically configured to increase or reduce a resource allocation volume for each application in the application set according to the resource configuration proportion.

8. The apparatus according to claim 6 or 7, wherein each resource carries a resource identifier, and
the processing unit is specifically configured to: determine, according to the resource scaling policy, a target resource set that is configured for the application set, wherein each target resource in the target resource set carries the resource identifier, and each application in the application set corresponds, on a one-to-one basis, to the resource identifier of each target resource in the target resource set; and perform resource scaling processing on each application in the application set according to the resource identifier of each target resource in the target resource set.

9. The apparatus according to any one of claims 6 to 8, wherein the apparatus further comprises an obtaining unit, configured to obtain resource usage of each application in the application set; and
the determining unit is specifically configured to: determine resource usage of a first application in the application set, and use the resource usage of the first application as the resource usage of the application set; or determine a sum, a maximum value, a minimum value, or an average value of resource usage of applications in the application set, and use the sum, the maximum value, the minimum value, or the average value of the resource usage of the applications in the application set as the resource usage of the application set.

10. The apparatus according to any one of claims 6 to 9, wherein the resource usage comprises at least one of the following: CPU usage, memory usage, and disk space usage.
